# EUROPEAN PATENT APPLICATION

(11) **EP 4 797 400 A1**
(43) Date of publication of application: **26.08.2026**
(21) Application number: 24919686.6
(22) Date of filing: 15.08.2024
(51) Int. Cl.: H01M 50/204

(54) **BATTERY CELL, BATTERY, AND ELECTRIC DEVICE**

(30) Priority: 25.01.2024 CN 202410107299
(71) Applicant: Contemporary Amperex Technology Co., Limited, Ningde, Fujian 352100 (CN)
(72) Inventor: ZHANG, Rongji, Ningde, Fujian 352100 (CN)
(74) Representative: Ran, Handong
(86) International application number: PCT/CN2024/112431
(87) International publication number: WO 2025/156604

(57) **Abstract**

Disclosed in embodiments of the present application are a battery cell, a battery, and an electric device. The battery cell comprises: a plurality of walls, wherein the plurality of walls include a first wall, a second wall and a third wall, the first wall and the second wall are arranged opposite to each other, and the third wall is used for connecting the first wall to the second wall; an electrode assembly, wherein a first end face of the electrode assembly is provided with a first tab and a second tab of opposite polarity, and the first end face is the end face of the electrode assembly facing the third wall; a first electrode terminal arranged on the first wall and electrically connected to the first tab; a second electrode terminal arranged on the second wall and electrically connected to the second tab; and a pressure relief mechanism arranged on the third wall. The battery cell, the battery, and the electric device of the embodiments of the present application can improve the reliability of the battery.

## Description

### CROSS-REFERENCE TO RELATED APPLICATION

The present application claims priority to Chinese Patent Application No. 202410107299.4, filed on January 25, 2024 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Energy conservation and emission reduction are the keys to the sustainable development of the automobile industry. In this case, electric vehicles have become an important part of the sustainable development of the automobile industry due to their energy conservation and environmental protection advantages. For electric vehicles, the battery technology is an important factor in their development.

In the development of battery technologies, in addition to improving the performance of batteries, the safety issue is also a problem that cannot be ignored. If the safety of the battery cannot be guaranteed, the battery cannot be used. Therefore, how to enhance the safety and reliability of batteries is an important technical problem in the development of the battery technologies.

### SUMMARY

Embodiments of the present application provide a battery cell, a battery, and an electric device, which can improve the reliability of the battery.

In a first aspect, a battery cell is provided. The battery cell includes: a plurality of walls, where the plurality of walls include a first wall, a second wall, and a third wall, the first wall and the second wall are disposed opposite to each other, and the third wall is configured to connect the first wall and the second wall; an electrode assembly, where a first end surface of the electrode assembly is provided with a first tab and a second tab opposite in polarity, and the first end surface is an end surface, facing the third wall, of the electrode assembly; a first electrode terminal, disposed on the first wall, where the first electrode terminal is configured to be electrically connected to the first tab; a second electrode terminal, disposed on the second wall, where the second electrode terminal is configured to be electrically connected to the second tab; and a pressure relief mechanism, disposed on the third wall.

Therefore, for the battery cell according to the embodiments of the present application, disposing the two tabs of the electrode assembly on the same end surface can reduce the dimension of the electrode assembly in a direction perpendicular to the first end surface, thereby reducing the dimension of the battery cell in the direction. Disposing the two electrode terminals respectively on two opposite walls and on walls different from the walls corresponding to the two tabs can further reduce the dimension of the battery cell in the direction perpendicular to the first end surface, thereby improving the space utilization rate inside the battery. Further, the pressure relief mechanism and the two electrode terminals are located on different walls, respectively. In this way, when thermal runaway occurs due to the internal pressure or temperature of the battery cell reaching a preset threshold, the impact of emissions discharged through the pressure relief mechanism on the two electrode terminals can be reduced, the risk of thermal propagation inside the battery in which the battery cell undergoing thermal runaway is located is reduced, and the risk of explosion of the battery can also be reduced, thereby improving the reliability of the battery.

In some embodiments, the battery cell further includes: a shell body, where the shell body is configured to accommodate the electrode assembly, the shell body is provided with a first opening and a second opening disposed opposite to each other, and the third wall is a wall of the shell body; a first cover plate, where the first cover plate is configured to lid the first opening, and the first cover plate is the first wall; and a second cover plate, where the second cover plate is configured to lid the second opening, and the second cover plate is the second wall. During the assembly of the battery cell, the electrode assembly may enter the interior of the shell body through any one of the openings of the shell body, and then the first cover plate lids the first opening and the second cover plate lids the second opening, so as to improve the processing efficiency. In addition, during use of the battery cell, if the electrode assembly undergoes expansion, the risk of connection failure between the shell body and the two cover plates can be reduced, improving the structural strength and stability of the battery cell.

In some embodiments, the battery cell further includes: a first connecting member, where the first connecting member is configured to connect the first tab and the first electrode terminal, and the first connecting member includes a first connecting part and a second connecting part that are relatively bent, the first connecting part being configured to be electrically connected to the first tab, and the second connecting part being configured to be electrically connected to the first electrode terminal; and a second connecting member, where the second connecting member is configured to connect the second tab and the second electrode terminal, and the second connecting member includes a third connecting part and a fourth connecting part that are relatively bent, the third connecting part being configured to be electrically connected to the second tab, and the fourth connecting part being configured to be electrically connected to the second electrode terminal. By means of the first connecting member and the second connecting member that are bent, the first electrode terminal and the first tab may be disposed on different sides, and the second electrode terminal and the second tab may be disposed on different sides, such that the structure is simple and easy to implement.

In some embodiments, the first connecting member is of an integrally formed structure; and/or the second connecting member is of an integrally formed structure. The connection steps between the first connecting part and the second connecting part can be eliminated; the connection steps between the third connecting part and the fourth connecting part can also be eliminated. This simplifies the structure of the first connecting member and/or the second connecting member, simplifies the assembly process of the battery cell, and improves the mounting efficiency of the battery cell.

In some embodiments, the first connecting part is perpendicular to the second connecting part; and/or the third connecting part is perpendicular to the fourth connecting part, so as to save space.

In some embodiments, the first wall is provided with a first groove recessed toward an interior of the battery cell; and/or the second wall is provided with a second groove recessed toward the interior of the battery cell. If the electrode assembly undergoes expansion, the first groove of the first wall may provide a deformation margin for the first wall to undergo tensile deformation, reducing the risk of cracking between the first wall and other connected walls; and the second groove may provide a deformation margin for the second wall to undergo tensile deformation, reducing the risk of cracking between the second wall and other connected walls.

In some embodiments, the first groove is an annular groove and surrounds an edge region of the first wall; and/or the second groove is an annular groove and surrounds an edge region of the second wall. This facilitates processing and can also enable the deformation of the first wall and the second wall to be uniformly distributed, thereby providing the deformation margin for tensile deformation of the first wall and the second wall in all directions and providing the structural stability.

In some embodiments, the battery cell further includes an insulating component, and the insulating component is disposed between the first end surface and the third wall, and may be configured not only to achieve an electrical insulation between the tab and the third wall but also to support the third wall.

In some embodiments, the insulating component is provided with a pressure relief hole, and the pressure relief hole is configured to provide clearance for the pressure relief mechanism, so as to be promptly actuated when the internal pressure or temperature of the battery cell reaches a preset threshold, thereby promptly relieving the internal pressure or temperature of the battery cell.

In some embodiments, the electrode assembly includes a first electrode plate and a second electrode plate opposite in polarity. The first electrode plate is connected to the first tab, and the second electrode plate is connected to the second tab. The first electrode plate and the second electrode plate are arranged in a winding manner along a winding axis, and the winding axis is perpendicular to the first end surface. The wound electrode assembly features a simple processing process, which can improve the processing efficiency of the battery cell.

In some embodiments, the electrode assembly includes a plurality of first electrode plates and a plurality of second electrode plates. The first electrode plate and the second electrode plate are opposite in polarity, the first electrode plate is connected to the first tab, and the second electrode plate is connected to the second tab. The plurality of first electrode plates and the plurality of second electrode plates are alternately stacked in a stacking direction, and the stacking direction is parallel to the first end surface.

In some embodiments, the electrode assembly includes a first electrode plate and a plurality of second electrode plates. The first electrode plate and the second electrode plate are opposite in polarity, the first electrode plate is connected to the first tab, and the second electrode plate is connected to the second tab. The first electrode plate includes a plurality of stacked segments and at least one bent segment. The bent segment is configured to connect two adjacent stacked segments. The plurality of stacked segments and the plurality of second electrode plates are alternately stacked in a stacking direction, and the stacking direction is parallel to the first end surface.

The above stacked electrode assembly features a simple processing manner and can fully utilize the internal space of the battery cell, improving the space utilization rate, thereby improving the energy density of the battery cell.

In a second aspect, a battery is provided. The battery includes a plurality of battery cells, and the battery cell is the battery cell according to the first aspect or according to any one of the embodiments of the first aspect.

In a third aspect, an electric device is provided. The electric device includes a battery, the battery includes the battery cell according to the first aspect or according to any one of the embodiments of the first aspect, and the battery is configured to supply power to the electric device.

In some embodiments, the electric device is a vehicle, a ship, or a spacecraft.

### BRIEF DESCRIPTION OF THE DRAWINGS

FIG. 1 is a schematic diagram of a vehicle according to one embodiment of the present application;
FIG. 2 is a schematic diagram of an exploded structure of a battery according to one embodiment of the present application;
FIG. 3 is a schematic structural diagram of a battery cell according to one embodiment of the present application;
FIG. 4 is a schematic front view of a battery cell according to one embodiment of the present application;
FIG. 5 is a schematic diagram of an exploded structure of a battery cell according to one embodiment of the present application;
FIG. 6 is a schematic structural diagram of an electrode assembly and a connecting member according to one embodiment of the present application;
FIG. 7 is an expanded schematic diagram of a partial structure of a battery cell according to one embodiment of the present application;
FIG. 8 is a schematic structural diagram of a wound electrode assembly according to one embodiment of the present application;
FIG. 9 is a schematic diagram of a partially expanded structure of a wound electrode assembly according to one embodiment of the present application;
FIG. 10 is a schematic diagram of a partially expanded structure of a stacked electrode assembly according to one embodiment of the present application;
FIG. 11 is a schematic top view of a partially expanded structure of a stacked electrode assembly according to one embodiment of the present application;
FIG. 12 is a schematic structural diagram of a stacked electrode assembly according to one embodiment of the present application;
FIG. 13 is another schematic structural diagram of a stacked electrode assembly according to one embodiment of the present application;
FIG. 14 is a schematic structural diagram of a plurality of stacked electrode assemblies according to one embodiment of the present application;
FIG. 15 is another schematic structural diagram of a plurality of stacked electrode assemblies according to one embodiment of the present application;
FIG. 16 is another schematic structural diagram of an electrode assembly and a connecting member according to one embodiment of the present application;
FIG. 17 is a schematic structural diagram of a first wall or a second wall according to one embodiment of the present application;
FIG. 18 is a schematic structural front view of a first wall or a second wall according to one embodiment of the present application; and
FIG. 19 is a schematic structural diagram of an insulating component according to one embodiment of the present application.

The drawings are not drawn to scale.

### DETAILED DESCRIPTION

The technical solutions in embodiments of the present application will be described below with reference to the drawings.

To make the objectives, technical solutions, and advantages of the embodiments of the present application clearer, the technical solutions in the embodiments of the present application will be clearly described below with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application or the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" should be interpreted in their broad senses. For example, they may be a fixed connection, a detachable connection, or an integrated connection; or a direct connection, an indirect connection via an intermediate, or a communication between interiors of two elements. For those of ordinary skill in the art, the specific meaning of the above terms in the present application may be interpreted according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two). Similarly, "plurality of groups" refers to two or more (including two) groups, and "plurality of pieces" refers to two or more (including two) pieces.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

In some embodiments, the negative electrode may be a negative electrode plate, and the negative electrode plate may include a negative electrode current collector.

As an example, the negative electrode plate may include a negative electrode current collector and a negative electrode active material disposed on at least one surface of the negative electrode current collector.

In some embodiments, the battery cell further includes an electrolyte that serves to conduct ions between the positive electrode and the negative electrode. The present application does not specifically limit the type of the electrolyte, which may be selected according to requirements. The electrolyte may be liquid-state, gel-state, or solid-state.

In some embodiments, the shape of the electrode assembly may be cylindrical, flat, multi-prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a shell body and a cover plate.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The battery mentioned in the embodiments of the present application may include one or more battery cells to provide a single physical module with a higher voltage and capacity. When a plurality of battery cells are provided, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

Current battery cells generally include a shell body and an electrode assembly accommodated in the shell body. The shell body is of a hollow structure with one end open, the shell body is filled with an electrolyte, and a cover plate lids the opening of the shell body. The cover plate is generally provided with an electrode terminal and a pressure relief mechanism thereon. The electrode terminal is electrically connected to a tab of the electrode assembly to output electrical energy of the battery cell. The pressure relief mechanism is configured to be actuated to relieve the internal pressure or temperature of the battery cell when the internal pressure or temperature of the battery cell reaches a preset threshold. However, when thermal runaway occurs due to the internal pressure or temperature of the battery cell reaching the preset threshold, a large number of emissions will be discharged via the pressure relief mechanism. These emissions generally include conductive particles, and the conductive particles splash onto the electrode terminals around the pressure relief mechanism, which is likely to cause short circuits between the electrode terminals of different battery cells, and thus causes thermal propagation and even explosion, seriously affecting the safety performance of the battery.

Therefore, the embodiments of the present application provide a battery cell, a battery, and an electric device, which can solve the problems described above. The battery cell according to the embodiments of the present application includes a plurality of walls, where the plurality of walls include a first wall, a second wall, and a third wall. The first wall and the second wall are disposed opposite to each other, and the third wall is configured to connect the first wall and the second wall. The battery cell further includes an electrode assembly. A first tab and a second tab, which are opposite in polarity, of the electrode assembly are both located on a first end surface of the electrode assembly, and the first end surface is an end surface, facing the third wall, of the electrode assembly. Disposing the two tabs of the electrode assembly on the same end surface can reduce the dimension of the electrode assembly in a direction perpendicular to the first end surface, thereby reducing the dimension of the battery cell in the direction.

The battery cell further includes a first electrode terminal and a second electrode terminal opposite in polarity. The first electrode terminal is disposed on the first wall and configured to be electrically connected to the first tab, and the second electrode terminal is disposed on the second wall and configured to be electrically connected to the second tab. Disposing the two electrode terminals respectively on two opposite walls and on walls different from the walls corresponding to the two tabs can further reduce the dimension of the battery cell in the direction perpendicular to the first end surface, thereby improving the space utilization rate inside the battery.

In addition, the battery cell further includes a pressure relief mechanism disposed on the third wall. The pressure relief mechanism and the two electrode terminals are located on different walls, respectively. In this way, when thermal runaway occurs due to the internal pressure or temperature of the battery cell reaching the preset threshold, the impact of emissions discharged through the pressure relief mechanism on the two electrode terminals can be reduced, the risk of thermal propagation inside the battery in which the battery cell undergoing thermal runaway is located is reduced, and the risk of explosion of the battery can also be reduced, thereby improving the reliability of the battery.

The technical solutions described in the embodiments of the present application are all suitable for various electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

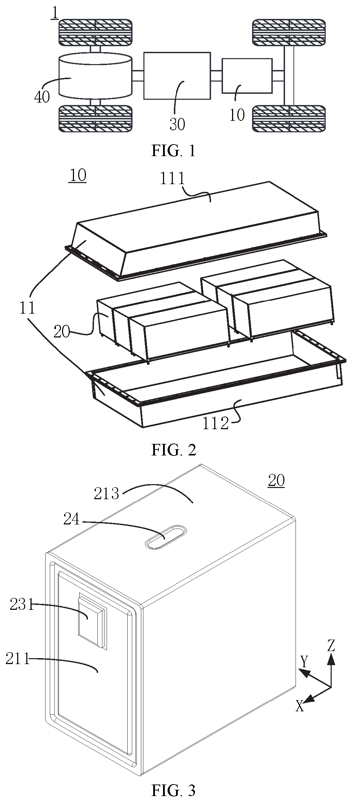

For example, as shown in FIG. 1, FIG. 1 is a schematic structural diagram of a vehicle 1 according to one embodiment of the present application. The vehicle 1 may be a fuel vehicle, a gas vehicle, or a new energy vehicle, and the new energy vehicle may be a pure electric vehicle, a hybrid vehicle, an extended-range vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, the front, or the rear of the vehicle 1. The battery 10 may be configured to supply power to the vehicle 1. For example, the battery 10 may serve as an operation power source for the vehicle 1 and is used in a circuit system of the vehicle 1, e.g., for the operation power needed by the vehicle 1 for startup, navigation, and driving. In another embodiment of the present application, the battery 10 may not only serve as an operation power source for the vehicle 1, but also serve as a driving power source for the vehicle 1 to, replacing or partially replacing fuel or natural gas, provide driving power for the vehicle 1.

For example, FIG. 2 shows a schematic diagram of a part of the structure of a battery 10 according to an embodiment of the present application. As shown in FIG. 2, the battery 10 according to the embodiments of the present application may include a plurality of battery cells 20 to meet different power usage requirements. As shown in FIG. 2, the battery 10 according to the embodiments of the present application may further include a case 11, and the case 11 may be configured to accommodate the plurality of battery cells 20. The interior of the case 11 according to the embodiments of the present application is of a hollow structure, and the plurality of battery cells 20 are accommodated in the case 11. The case 11 may include two parts, herein referred to as a first case part 111 and a second case part 112, and the first case part 111 and the second case part 112 are snap-fitted together. The shapes of the first case part 111 and the second case part 112 may be determined based on the shape of the component accommodated inside, for example, based on the shape of a combination of the plurality of battery cells 20 accommodated inside.

It should be understood that at least one of the first case part 111 and the second case part 112 is provided with one opening. For example, as shown in FIG. 2, the first case part 111 and the second case part 112 may each be a hollow rectangular parallelepiped, each having one open face. The opening of the first case part 111 and the opening of the second case part 112 may be disposed opposite to each other, and the first case part 111 and the second case part 112 are snap-fitted together to form the case 11 with an enclosed chamber. The chamber may be configured to accommodate a plurality of battery cells 20. The plurality of battery cells 20, after being connected in parallel, in series, or in series-parallel, are disposed inside the case 11 formed after the first case part 111 and the second case part 112 are snap-fitted together.

For another example, unlike the configuration shown in FIG. 2, only one of the first case part 111 and the second case part 112 may be a hollow rectangular parallelepiped with an opening, while the other is plate-shaped, so as to lid the opening. In an example where the second case part 112 is a hollow rectangular parallelepiped and provided with one opening and the first case part 111 is plate-shaped, the first case part 111 lids the opening of the second case part 112 to form the case 11 with an enclosed chamber, and the chamber may be configured to accommodate the plurality of battery cells 20.

In some embodiments, the battery 10 may further include a busbar component, and the busbar component may be configured to achieve an electrical connection among the plurality of battery cells 20, such as in parallel, in series, or in series-parallel connection. Specifically, the busbar component may achieve the electrical connection among battery cells 20 by connecting to electrode terminals of the battery cells 20; alternatively, the busbar component may also achieve the electrical connection among battery cells 20 by connecting to other components of the battery cells 20. For example, the busbar component may be electrically connected to a sealing structure or a shell body of battery cell 20, thereby achieving the electrical connection among the battery cells 20. Further, the busbar component may be fixed to the corresponding components of the battery cells 20 by welding. For example, the busbar component may be fixed to the electrode terminals, the sealing structure, the shell body, or the like by welding. The embodiments of the present application are not limited thereto.

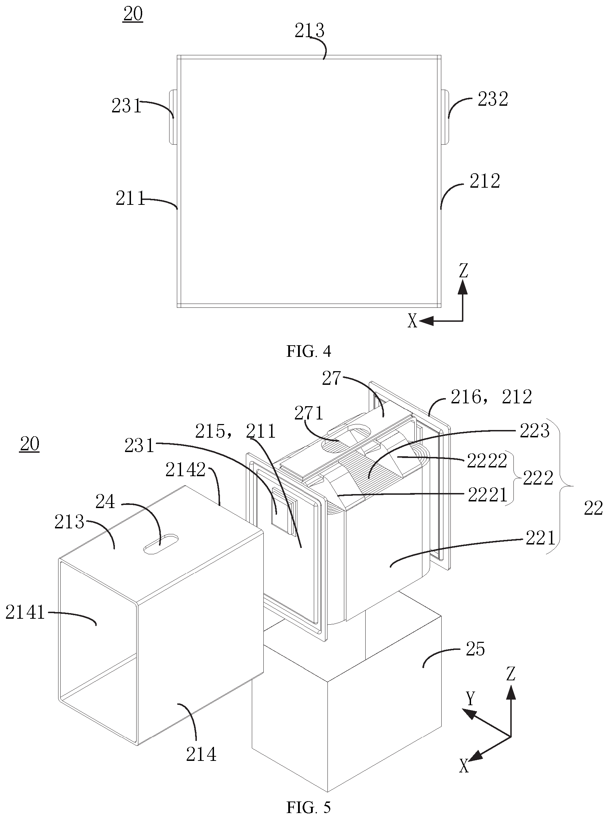

FIG. 3 shows a schematic structural diagram of a battery cell 20 according to an embodiment of the present application. FIG. 4 shows a schematic front view of a battery cell 20 according to an embodiment of the present application; for example, FIG. 4 may be a front view of the battery cell 20 shown in FIG. 3. FIG. 5 shows a schematic diagram of an exploded structure of a battery cell 20 according to an embodiment of the present application; for example, FIG. 5 may be a schematic diagram of an exploded structure of the battery cell 20 as shown in FIGs. 3 and 4.

As shown in FIGs. 3 to 5, the battery cell 20 according to the embodiments of the present application may include a plurality of walls, and the plurality of walls include a first wall 211, a second wall 212, and a third wall 213. The first wall 211 and the second wall 212 are disposed opposite to each other, and the third wall 213 is configured to connect the first wall 211 and the second wall 212. The battery cell 20 according to the embodiments of the present application may further include an electrode assembly 22, a first end surface 223 of the electrode assembly 22 is provided with a first tab 2221 and a second tab 2222 opposite in polarity, and the first end surface 223 is an end surface, facing the third wall 213, of the electrode assembly 22. The battery cell 20 according to the embodiments of the present application may further include a first electrode terminal 231 and a second electrode terminal 232. The first electrode terminal 231 is disposed on the first wall 211, and the first electrode terminal 231 is configured to be electrically connected to the first tab 2221. The second electrode terminal 232 is disposed on the second wall 212, and the second electrode terminal 232 is configured to be electrically connected to the second tab 2222. The battery cell 20 according to the embodiments of the present application may further include a pressure relief mechanism 24, and the pressure relief mechanism 24 is disposed on the third wall 213.

It should be understood that the battery cell 20 according to the embodiments of the present application includes a plurality of walls, and the plurality of walls may be configured to form a hollow polyhedral structure to accommodate the electrode assembly 22. For example, the embodiments of the present application are described mainly by taking a rectangular parallelepiped battery cell 20 as an example, but the embodiments of the present application are not limited thereto.

The first wall 211, the second wall 212, and the third wall 213 according to the embodiments of the present application are any three walls of the battery cell 20. Specifically, the first wall 211 and the second wall 212 are disposed opposite to each other; that is, the first wall 211 and the second wall 212 are not directly connected. For example, taking the rectangular parallelepiped battery cell 20 as an example, the first wall 211 and the second wall 212 may be any two walls of the battery cell 20 that are disposed opposite to each other and parallel to each other. The third wall 213 according to the embodiments of the present application is configured to connect the first wall 211 and the second wall 212. The third wall 213 may be directly connected to the first wall 211 or indirectly connected to the first wall by means of other walls. Similarly, the third wall 213 may be directly connected to the second wall 212 or indirectly connected to the second wall by means of other walls. For example, taking the rectangular parallelepiped battery cell 20 as an example, the third wall 213 may be a wall that is directly connected to the first wall 211 and the second wall 212.

It should be understood that the electrode assembly 22 according to the embodiments of the present application may include a tab 222, and the tab 222 can conduct current out from the electrode assembly 22. Specifically, the tab 222 of the electrode assembly 22 includes a first tab 2221 and a second tab 2222 opposite in polarity. The two tabs 222 are both located on the first end surface 223 of the electrode assembly 22; that is, the two tabs 222 protrude from the same side of the electrode assembly 22. Disposing the two tabs 222 of the electrode assembly 22 on the same end surface can reduce the dimension of the electrode assembly 22 in a direction perpendicular to the first end surface 223. For example, taking a height direction Z of the electrode assembly 22 being perpendicular to the first end surface 223 as an example, the dimension of the electrode assembly 22 in the height direction Z can be reduced, thereby reducing the dimension of the battery cell 20 in the height direction Z.

In some embodiments, the first tab 2221 according to the embodiments of the present application may be a positive electrode tab, and the second tab 2222 is a negative electrode tab; alternatively, the first tab 2221 may be a negative electrode tab, and the second tab 2222 is a positive electrode tab. The embodiments of the present application are not limited thereto.

In some embodiments, the electrode assembly 22 may include at least one first tab 2221 and at least one second tab 2222. According to the embodiments of the present application, any one of the first tabs 2221 of the electrode assembly 22 and a corresponding second tab 2222 are mainly used as an example. For example, as shown in FIGs. 3 to 5, the electrode assembly 22 may include one first tab 2221 and one second tab 2222, but the embodiments of the present application are not limited thereto.

It should be understood that according to the embodiments of the present application, the first electrode terminal 231 disposed on the first wall 211 is electrically connected to the first tab 2221, and the second electrode terminal 232 disposed on the second wall 212 is electrically connected to the second tab 2222. Since the two electrode terminals are respectively located on different walls, and the walls on which the two electrode terminals are located are different from the walls corresponding to the tabs 222, the dimension of the battery cell 20 in the direction perpendicular to the first end surface 223 can be further reduced. For example, the dimension of the battery cell 20 in the height direction Z of the electrode assembly 22 can be reduced, thereby improving the space utilization rate inside the battery 10.

In the embodiments of the present application, the first electrode terminal 231 may be a positive electrode terminal, and the second electrode terminal 232 is a negative electrode terminal; alternatively, the first electrode terminal 231 may be a negative electrode terminal, and the second electrode terminal 232 is a positive electrode terminal. The embodiments of the present application are not limited thereto.

In some embodiments, the battery cell 20 may include at least one first electrode terminal 231 and at least one second electrode terminal 232. According to the embodiments of the present application, any one of the first electrode terminals 231 of the battery cell 20 and a corresponding second electrode terminal 232 are mainly used as an example. For example, the battery cell 20 according to the embodiments of the present application may include a plurality of first electrode terminals 231, and the plurality of first electrode terminals 231 may all be located on the first wall 211; the battery cell 20 according to the embodiments of the present application may also include a plurality of second electrode terminals 232, and the plurality of second electrode terminals 232 may all be located on the second wall 212, but the embodiments of the present application are not limited thereto. As shown in FIGs. 3 to 5, the battery cell 20 including one first electrode terminal 231 and one second electrode terminal 232 is used as an example here.

In the embodiments of the present application, the battery cell 20 further includes a pressure relief mechanism 24 disposed on the third wall 213. Since the pressure relief mechanism 24 and the two electrode terminals are located on different walls, respectively, when thermal runaway occurs due to the internal pressure or temperature of the battery cell 20 reaching the preset threshold, the impact of emissions discharged through the pressure relief mechanism 24 on the two electrode terminals can be reduced, the risk of thermal propagation inside the battery 10 caused by the battery cell 20 undergoing thermal runaway is reduced, and the risk of explosion of the battery 10 can also be reduced, thereby improving the reliability of the battery 10.

It should be understood that the pressure relief mechanism 24 according to the embodiments of the present application refers to an element or a component that is actuated to relieve the internal pressure or temperature when the internal pressure or temperature of the battery cell 20 reaches a preset threshold. The designed threshold varies according to different design requirements. The threshold may depend on the material of one or more of the positive electrode plate, the negative electrode plate, an electrolytic solution, and a separation film in the battery cell 20.

The term "actuate" mentioned in the present application means that the pressure relief mechanism 24 generates an action or is activated to a certain state to allow the relief of the internal pressure and temperature of the battery cell 20. The actions generated by the pressure relief mechanism 24 may include, but are not limited to: crack, breakage, tearing, or opening of at least a part of the pressure relief mechanism 24. When the pressure relief mechanism 24 is actuated, high-temperature and high-pressure substances inside the battery cell 20 are discharged outward from the actuated part as emissions. In this way, the battery cell 20 can undergo pressure relief and temperature relief under the condition of controllable pressure or temperature, thereby preventing potentially more severe accidents.

The emissions from the battery cell 20 mentioned in the present application include, but are not limited to: electrolytic solution, dissolved or split positive and negative electrode plates, fragments of a separation film, high-temperature and high-pressure gas generated by reaction, flame, and the like.

The pressure relief mechanism 24 according to the embodiments of the present application is disposed on the third wall 213 of the battery cell 20. The pressure relief mechanism 24 may be a part of the third wall 213, or may be a split-type structure from the third wall 213, and is fixed on the third wall 213 by means of, for example, welding. The embodiments of the present application are not limited thereto. For example, when the pressure relief mechanism 24 is a part of the third wall 213, for example, the pressure relief mechanism 24 may be formed by providing a score on the third wall 213, and the thickness of the third wall 213 corresponding to the score is less than the thickness of other regions of the pressure relief mechanism 24, except for the region where the score is provided. The score is where the pressure relief mechanism 24 is weakest. When too much gas generated by the battery cell 20 raises the internal pressure to reach the threshold or heat generated by the internal reaction of the battery cell 20 raises the internal temperature of the battery cell 20 to reach the threshold, the pressure relief mechanism 24 may crack at the score to cause the inside and the outside of the battery cell 20 to be in communication with each other, and the gas pressure and the temperature are relieved outward by the cracking of the pressure relief mechanism 24, thereby preventing the battery cell 20 from exploding.

For another example, the pressure relief mechanism 24 may also be a split-type structure from the third wall 213. The pressure relief mechanism 24 may take the form of an anti-explosion valve, a gas valve, a pressure relief valve, a safety valve, or the like, and may specifically adopt a pressure-sensitive or temperature-sensitive element or configuration. That is, when the internal pressure or temperature of the battery cell 20 reaches the preset threshold, the pressure relief mechanism 24 performs an action, or the weak structure provided in the pressure relief mechanism 24 is damaged, thereby forming an opening or a channel for relieving the internal pressure or temperature.

It should be understood that the battery cell 20 according to the embodiments of the present application further includes a shell body 214, a first cover plate 215, and a second cover plate 216. Specifically, the shell body 214 is configured to accommodate the electrode assembly 22, and the shell body 214 is provided with a first opening 2141 and a second opening 2142 disposed opposite to each other. The first cover plate 215 is configured to lid the first opening 2141, and the second cover plate 216 is configured to lid the second opening 2142.

The shell body 214 according to the embodiments of the present application may be made of various materials, such as copper, iron, aluminum, steel, and aluminum alloy. The shell body 214 may be in various shapes, such as a cylinder and a rectangular parallelepiped. Illustratively, as shown in FIGs. 3 to 5, according to the embodiments of the present application, the shell body 214 being a rectangular parallelepiped is mainly used as an example. Illustratively, the shell body 214 is provided with two openings, which are a first opening 2141 and a second opening 2142, and the two openings are two opposite surfaces of the shell body 214. The structure with openings at two ends facilitates the assembly of the internal electrode assembly 22, and the electrode assembly 22 may enter the shell body 214 through any one of the openings, which can improve the processing efficiency of the battery cell 20.

According to the embodiments of the present application, the first cover plate 215 is configured to lid the first opening 2141 of the shell body 214, and the second cover plate 216 is configured to lid the second opening 2142 of the shell body 214, thereby serving as components that isolate the internal environment of the battery cell 20 from the external environment. The materials of the two cover plates may be the same or different. For example, the two cover plates are generally made of the same material, so as to facilitate processing. Each cover plate according to the embodiments of the present application may also be made of various materials, such as copper, iron, aluminum, steel, and aluminum alloy. In addition, the two cover plates and the shell body 214 may be made of the same material or different materials.

It should be understood that the shape of each cover plate according to the embodiments of the present application may be adapted to the shape of the shell body 214. For example, as shown in FIGs. 3 to 5, when the shell body 214 is of a rectangular parallelepiped structure, the shapes of the first cover plate 215 and the second cover plate 216 may be the same; for example, both the first cover plate and the second cover plate are of a plate-shaped structure adapted to the shell body 214. Alternatively, unlike the embodiments shown in FIGs. 3 to 5, the shapes of the first cover plate 215 and the second cover plate 216 may also be of a hollow rectangular parallelepiped structure with one end open, such that the two cover plates lid the shell body 214 to form a rectangular parallelepiped-shaped battery cell 20. Alternatively, the shapes of the first cover plate 215 and the second cover plate 216 may also be different, and the embodiments of the present application are not limited thereto.

In some embodiments, the third wall 213 is a wall of the shell body 214; the first cover plate 215 is the first wall 211; and the second cover plate 216 is the second wall 212. During the assembly of the battery cell 20, the electrode assembly 22 may enter the interior of the shell body 214 through any one of the openings of the shell body 214, and then the first cover plate 215 lids the first opening 2141 and the second cover plate 216 lids the second opening 2142, so as to improve the processing efficiency. In addition, as shown in FIGs. 3 to 5, considering that the two tabs 222 of the electrode assembly 22 are located on the first end surface 223, the first end surface 223 being perpendicular to the height direction Z of the electrode assembly 22 is used as an example. During use of the battery cell 20, the electrode assembly 22 generally expands in the thickness direction thereof. For example, in an example where the thickness direction of electrode assembly 22 is a width direction Y of the electrode assembly 22, the dimension of the electrode assembly 22 in the width direction Y thereof changes greatly during the charging and discharging process of the battery cell 20. The two openings of the shell body 214 are disposed opposite to each other in a length direction X of the electrode assembly 22, such that the expansion of the electrode assembly 22 can be effectively constrained by means of the shell body 214, reducing the dimension change of the battery cell 20 during use. In addition, since the connection strength between the shell body 214 and each cover plate is limited, compared to disposing the two cover plates at other positions, in the case that the third wall 213 is the wall of the shell body 214, the first cover plate 215 is the first wall 211, and the second cover plate 216 is the second wall 212, the risk of connection failure between the shell body 214 and the two cover plates can be reduced, improving the structural strength and stability of the battery cell 20.

It should be understood that according to the embodiments of the present application, the first electrode terminal 231 may be directly or indirectly connected to the first tab 2221; the second electrode terminal 232 may be directly or indirectly connected to the second tab 2222. The following description is provided mainly by taking an example where the first electrode terminal 231 is indirectly connected to the first tab 2221 and the second electrode terminal 232 is indirectly connected to the second tab 2222 with reference to the drawings.

In the embodiments of the present application, the battery cell 20 further includes a first connecting member 261 and a second connecting member 262, where the first connecting member 261 is configured to connect the first tab 2221 and the first electrode terminal 231, and the second connecting member 262 is configured to connect the second tab 2222 and the second electrode terminal 232. The structures of the first connecting member 261 and the second connecting member 262 according to the embodiments of the present application may be configured according to actual applications, so as to achieve the arrangement of the electrode terminals and the tabs on different sides.

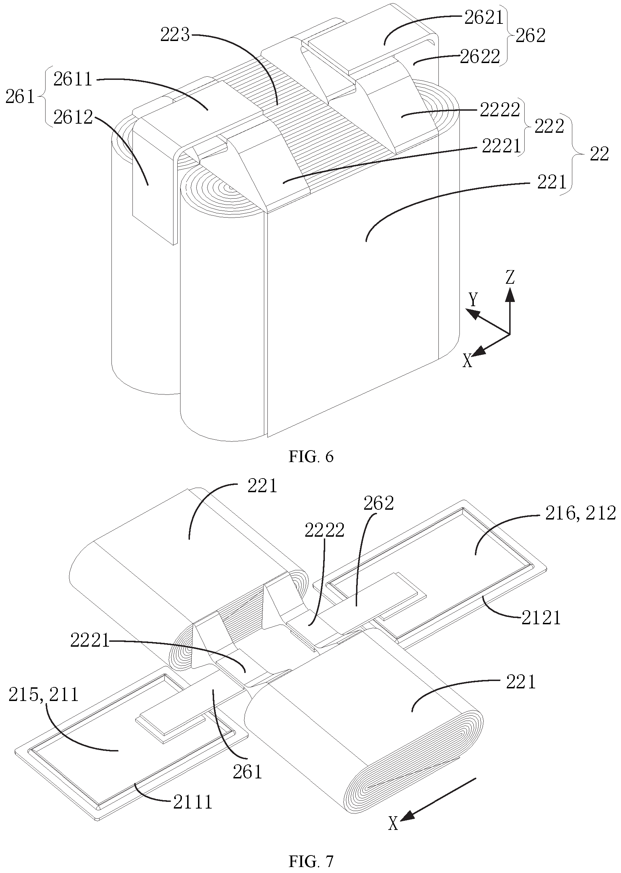

FIG. 6 shows a schematic structural diagram of an electrode assembly 22, a first connecting member 261, and a second connecting member 262 according to an embodiment of the present application. For example, the electrode assembly 22, the first connecting member 261, and the second connecting member 262 shown in FIG. 6 may be parts of the structure included in the battery cell 20 shown in FIGs. 3 to 5. As shown in FIGs. 5 and 6, the electrical connection between the electrode terminal and the corresponding tab may be achieved by means of the first connecting member 261 and the second connecting member 262 that are bent.

In some embodiments, the first connecting member 261 includes a first connecting part 2611 and a second connecting part 2612 that are relatively bent. The first connecting part 2611 is configured to be electrically connected to the first tab 2221, and the second connecting part 2612 is configured to be electrically connected to the first electrode terminal 231. The second connecting member 262 includes a third connecting part 2621 and a fourth connecting part 2622 that are relatively bent. The third connecting part 2621 is configured to be electrically connected to the second tab 2222, and the fourth connecting part 2622 is configured to be electrically connected to the second electrode terminal 232. By means of the first connecting member 261 and the second connecting member 262 that are bent, the first electrode terminal 231 and the first tab 2221 may be disposed on different sides, and the second electrode terminal 232 and the second tab 2222 may be disposed on different sides, such that the structure is simple and easy to implement.

In some embodiments, the first connecting member 261 is of an integrally formed structure; and/or the second connecting member 262 is of an integrally formed structure. The first connecting member 261 is configured as an integrally formed structure, which can eliminate the connection steps between the first connecting part 2611 and the second connecting part 2612; similarly, the second connecting member 262 is configured as an integrally formed structure, which can eliminate the connection steps between the third connecting part 2621 and the fourth connecting part 2622. This simplifies the structure of the first connecting member 261 and/or the second connecting member 262, simplifies the assembly process of the battery cell 20, and improves the mounting efficiency of the battery cell 20.

In some embodiments, the first connecting part 2611 is perpendicular to the second connecting part 2612; and/or the third connecting part 2621 is perpendicular to the fourth connecting part 2622. The right-angled first connecting member 261 can save space, especially in the case that the first wall 211 is perpendicular to the third wall 213; the configuration of the first connecting part 2611 being perpendicular to the second connecting part 2612 not only facilitates the electrical connection between the first electrode terminal 231 and the first tab 2221, but also reduces the space occupied by the first connecting member 261 inside the battery cell 20. Similarly, the right-angled second connecting member 262 can save space, especially in the case that the second wall 212 is perpendicular to the third wall 213; the configuration of the third connecting part 2621 being perpendicular to the fourth connecting part 2622 not only facilitates the electrical connection between the second electrode terminal 232 and the second tab 2222, but also reduces the space occupied by the second connecting member 262 inside the battery cell 20.

It should be understood that the assembly order of the battery cell 20 according to the embodiments of the present application may be flexibly set according to actual applications. For example, the electrode assembly 22 may be accommodated in the shell body 214 through any one of the openings of the shell body 214 first. Then, the first electrode terminal 231 disposed on the first cover plate 215 is electrically connected to the first tab 2221, and the first cover plate 215 lids the first opening 2141, such that the first cover plate 215 is connected to the shell body 214; and the second electrode terminal 232 disposed on the second cover plate 216 is electrically connected to the second tab 2222, and the second cover plate 216 lids the second opening 2142, such that the second cover plate 216 is connected to the shell body 214.

In some embodiments, different from the mounting manner described above, the battery cell 20 may also be assembled in other manners. FIG. 7 shows a schematic diagram of a partial structure of a battery cell 20 according to an embodiment of the present application. For example, FIG. 7 shows an expanded schematic structural diagram of an electrode assembly 22, a first connecting member 261, a second connecting member 262, a first cover plate 215, and a second cover plate 216 included in the battery cell 20 as shown in FIGs. 3 to 5. As shown in FIGs. 3 to 7, the relative fixation between the first cover plate 215 and the electrode assembly 22 may be achieved through the electrical connection between the first electrode terminal 231 disposed on the first cover plate 215 and the first tab 2221. Similarly, the relative fixation between the second cover plate 216 and the electrode assembly 22 may be achieved through the electrical connection between the second electrode terminal 232 disposed on the second cover plate 216 and the second tab 2222. In this way, the electrode assembly 22, the first cover plate 215, and the second cover plate 216 may jointly pass through any one of the openings of the shell body 214 to accommodate the electrode assembly 22 in the shell body 214, and then the first cover plate 215 and the second cover plate 216 are separately connected to the shell body 214, so as to complete the assembly of the battery cell 20.

In some embodiments, for different assembly manners, in order to improve the mounting efficiency of the battery cell 20, the first connecting member 261 and the second connecting member 262 may be connected first and then bent. Specifically, taking FIG. 7 as an example, before connection, the first connecting member 261 may be approximately of a flat plate structure. The first connecting part 2611 of the first connecting member 261 is electrically connected to the first tab 2221, and the second connecting part 2612 of the first connecting member 261 is electrically connected to the first electrode terminal 231. Then, the first connecting member 261 is bent. For example, taking FIGs. 5 and 6 as an example, after bending, the first tab 2221 and the first electrode terminal 231 can be allowed to face different sides of the battery cell 20. Similarly, before connection, the second connecting member 262 may also be approximately of a flat plate structure. The third connecting part 2621 of the second connecting member 262 is electrically connected to the second tab 2222, and the fourth connecting part 2622 of the second connecting member 262 is electrically connected to the second electrode terminal 232. Then, the second connecting member 262 is bent, so as to allow the second tab 2222 and the second electrode terminal 232 to face different sides of the battery cell 20.

In some embodiments, the battery cell 20 may further include an insulating layer 25, and the insulating layer 25 is configured to wrap at least a partial region of the electrode assembly 22, so as to isolate the electrode assembly 22 from the inner surface of the shell body 214, improving the reliability of the battery cell 20.

The electrode assembly 22 according to the embodiments of the present application will be described below with reference to the drawings.

The battery cell 20 according to the embodiments of the present application may include one or more electrode assemblies 22. The electrode assembly 22 is a component where the electrochemical reaction occurs in the battery cell 20. The electrode assembly 22 may include a positive electrode plate, a negative electrode plate, and a separator. The separator is configured to separate the positive electrode plate from the negative electrode plate.

In some embodiments, the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the negative electrode plate may include a negative electrode current collector.

As an example, the negative electrode current collector may be a metal foil or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may further include a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in the battery cell 20. As an example, the negative electrode active material may include at least one of the following materials: artificial graphite, natural graphite, soft carbon, hard carbon, a silicon-based material, a tin-based material, lithium titanate, and the like.

In some embodiments, the negative electrode may be a foam metal. The foam metal may be foam nickel, foam copper, foam aluminum, foam alloy, foam carbon, or the like. When the foam metal is used as the negative electrode plate, the surface of the foam metal may not be provided with the negative electrode active material. Certainly, the negative electrode active material may also be provided.

As an example, the negative electrode current collector may also be filled or/and deposited with a lithium source material, a potassium metal, or a sodium metal; the lithium source material is a lithium metal and/or a lithium-rich material.

In some embodiments, the material of the positive electrode current collector may be aluminum, and the material of the negative electrode current collector may be copper.

In some embodiments, the electrode assembly 22 according to the embodiments of the present application may include a tab 222 and a main body part 221. The tab 222 of the electrode assembly 22 may include a positive electrode tab and a negative electrode tab. The positive electrode tab is connected to a positive electrode plate of the main body part 221. For example, the positive electrode tab may be formed by a portion of the positive electrode current collector that is not coated with a positive electrode active substance layer, and protrudes from the positive electrode plate. Similarly, the negative electrode tab is connected to a negative electrode plate of the main body part 221. For example, the negative electrode tab may be formed by a portion of the negative electrode current collector that is not coated with a negative electrode active substance layer, and protrudes from the negative electrode plate. The main body part 221 is a portion of the electrode assembly 22 where active ions (such as lithium ions) are intercalated and deintercalated back and forth between the positive electrode plate and the positive electrode plate.

In some embodiments, the electrode assembly 22 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell 20 further includes an electrolyte that serves to conduct ions between the positive electrode and the negative electrode. The present application does not specifically limit the type of the electrolyte, which may be selected according to requirements. The electrolyte may be liquid-state, gel-state, or solid-state.

In some embodiments, the electrode assembly 22 may be of a wound structure or a stacked structure. The following description is provided with reference to the drawings. In addition, for ease of explanation, the electrode assembly 22 including a first electrode plate 2211 and a second electrode plate 2212 opposite in polarity is used as an example. For example, if the first electrode plate 2211 is a positive electrode plate, the second electrode plate 2212 is a negative electrode plate; alternatively, if the first electrode plate 2211 is a negative electrode plate, the second electrode plate 2212 is a positive electrode plate. In addition, the electrode assembly 22 may further include a separator 2213 for isolating the first electrode plate 2211 from the second electrode plate 2212.

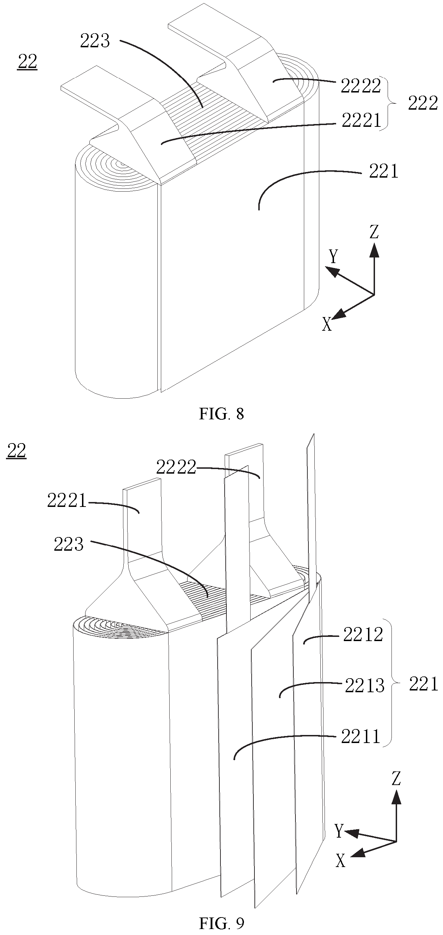

FIGs. 8 and 9 show schematic structural diagrams of a wound electrode assembly 22 according to an embodiment of the present application. For example, FIG. 8 may be a schematic diagram of an electrode assembly 22 after winding, and FIG. 9 may be a schematic diagram showing that an electrode assembly 22 is partially expanded. In FIGs. 8 and 9, an example where the first electrode plate 2211 is a positive electrode plate and the second electrode plate 2212 is a negative electrode plate is used, but the embodiments of the present application are not limited thereto.

In some embodiments, the electrode assembly 22 includes a first electrode plate 2211 and a second electrode plate 2212 opposite in polarity. The first electrode plate 2211 is connected to the first tab 2221, and the second electrode plate 2212 is connected to the second tab 2222. The first electrode plate 2211 and the second electrode plate 2212 are arranged in a winding manner along a winding axis, and the winding axis is perpendicular to the first end surface 223. As shown in FIGs. 8 and 9, the wound electrode assembly 22 features a simple processing process, which can improve the processing efficiency of the battery cell 20.

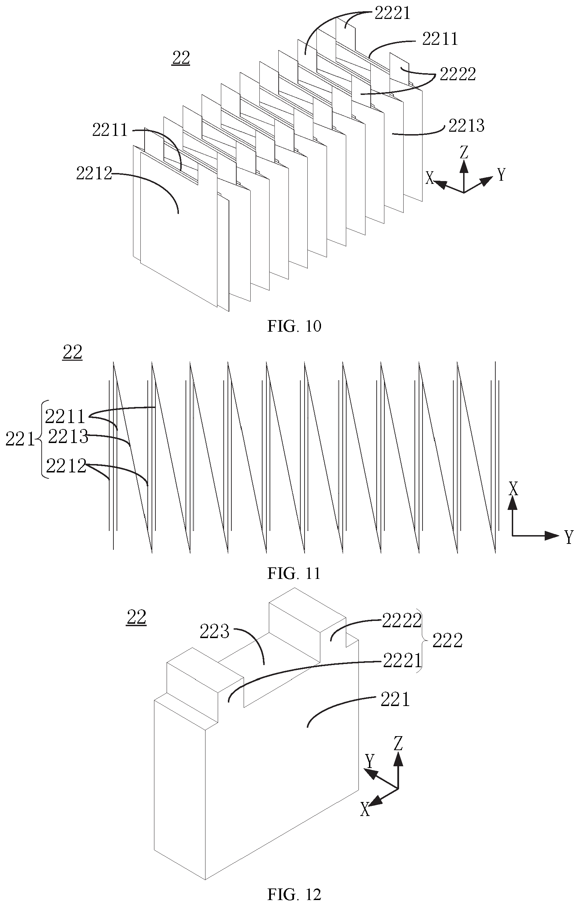

FIGs. 10 to 12 show schematic structural diagrams of a stacked electrode assembly 22 according to an embodiment of the present application, respectively. For example, FIGs. 10 and 11 may be partially expanded schematic diagrams of an electrode assembly 22 from different angles, and FIG. 12 may be a schematic structural diagram of an electrode assembly 22 after stacking. In FIGs. 10 to 12, the example where the first electrode plate 2211 is a positive electrode plate and the second electrode plate 2212 is a negative electrode plate is still used, but the embodiments of the present application are not limited thereto.

In some embodiments, the electrode assembly 22 includes a plurality of first electrode plates 2211 and a plurality of second electrode plates 2212. The first electrode plate 2211 and the second electrode plate 2212 are opposite in polarity, the first electrode plate 2211 is connected to the first tab 2221, and the second electrode plate 2212 is connected to the second tab 2222. The plurality of first electrode plates 2211 and the plurality of second electrode plates 2212 are alternately stacked in a stacking direction, and the stacking direction is parallel to the first end surface 223. For example, the stacking direction being the thickness direction Y of the electrode assembly 22 is used as an example in the figure.

In some embodiments, the stacked electrode assembly 22 may also adopt other structures. For example, the electrode assembly 22 includes a first electrode plate 2211 and a plurality of second electrode plates 2212. The first electrode plate 2211 and the second electrode plate 2212 are opposite in polarity, the first electrode plate 2211 is connected to the first tab 2221, and the second electrode plate 2212 is connected to the second tab 2222. The first electrode plate 2211 includes a plurality of stacked segments and at least one bent segment. The bent segment is configured to connect two adjacent stacked segments. The plurality of stacked segments and the plurality of second electrode plates 2212 are alternately stacked in a stacking direction, and the stacking direction is parallel to the first end surface 223. For example, the stacking direction being the thickness direction Y of the electrode assembly 22 is used as an example in the figure. Further, a plurality of positive electrode plates are generally provided, and the negative electrode plate is folded to form a plurality of folded segments disposed in a stacked manner, with one positive electrode plate clamped between adjacent folded segments, so as to reduce the phenomenon of metal plating. For example, the phenomenon of lithium plating or sodium plating can be reduced, improving the stability and service life of the electrode assembly 22.

In some embodiments, the stacked electrode assembly 22 may also be formed by folding both the positive electrode plate and the negative electrode plate to form a plurality of folded segments disposed in a stacked manner. The embodiments of the present application are not limited thereto.

The stacked electrode assembly 22 features a simple processing manner and can fully utilize the internal space of the battery cell 20, improving the space utilization rate, thereby improving the energy density of the battery cell 20.

It should be understood that for different types of the electrode assembly 22 described above, a plurality of separators 2213 may be provided, and are separately disposed between any adjacent positive electrode plates or negative electrode plates. Alternatively, the separators 2213 may also be provided continuously, and are disposed between any adjacent positive electrode plates or negative electrode plates by means of folding or winding. The embodiments of the present application are not limited thereto.

In the embodiments of the present application, the arrangement manner of the tabs 222 of the electrode assembly 22 may be set according to actual applications. For example, as shown in FIGs. 7 to 9, the first tab 2221 of the electrode assembly 22 may be formed by stacking multiple layers of tabs connected to the first electrode plate 2211, and the first tab 2221 is bent and then electrically connected to the first connecting part 2611 of the first connecting member 261. Further, if a plurality of electrode assemblies 22 are provided in the battery cell 20, a plurality of first tabs 2221 corresponding to the plurality of electrode assemblies 22 and the first connecting parts 2611 may be stacked on each other, for example, may be stacked on each other in the direction perpendicular to the first end surface 223 to save space. Similarly, the second tab 2222 of the electrode assembly 22 may be formed by stacking multiple layers of tabs connected to the second electrode plate 2212, and the second tab 2222 is bent and then electrically connected to the third connecting part 2621 of the second connecting member 262. Further, if a plurality of electrode assemblies 22 are provided in the battery cell 20, a plurality of second tabs 2222 corresponding to the plurality of electrode assemblies 22 and the third connecting parts 2621 may be stacked on each other, for example, may be stacked on each other in the direction perpendicular to the first end surface 223 to save space.

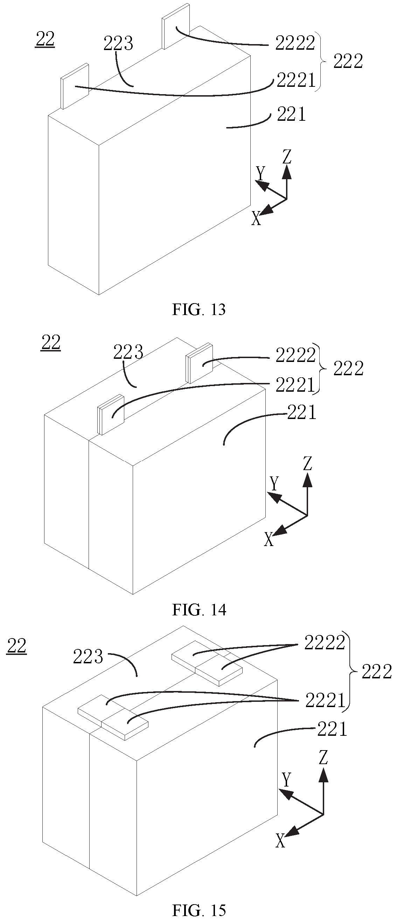

In some embodiments, the tabs 222 may also be configured in other manners. FIG. 13 shows a schematic structural diagram of an electrode assembly 22 according to an embodiment of the present application. The stacked electrode assembly 22 is used as an example here, but the embodiments of the present application are not limited thereto. As shown in FIGs. 12 and 13, the first tab 2221 of the electrode assembly 22 may be formed by stacking multiple layers of tabs connected to the first electrode plate 2211, and the multi-layer structured first tab 2221 may be pressed to one side of the first end surface 223 to save space. Similarly, the multi-layer structured second tab 2222 may also be pressed to one side of the first end surface 223 to save space.

FIG. 14 is a schematic structural diagram of a plurality of electrode assemblies 22 according to an embodiment of the present application, and two electrode assemblies 22 are used as an example here. As shown in FIG. 14, if a plurality of electrode assemblies 22 are provided inside the battery cell 20, the first tabs 2221 of any two adjacent electrode assemblies 22 may be disposed close to each other. Correspondingly, the second tabs 2222 of the two adjacent electrode assemblies 22 may also be disposed close to each other.

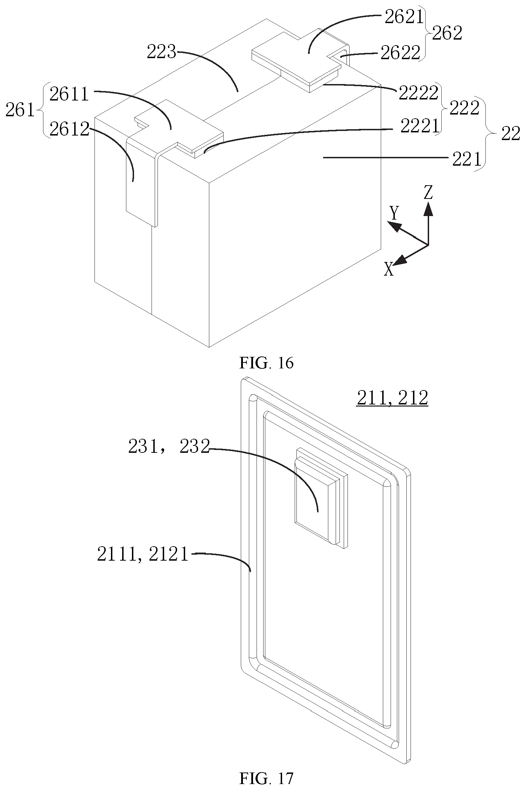

FIG. 15 shows another schematic structural diagram of a plurality of electrode assemblies 22 according to an embodiment of the present application, and FIG. 16 shows a schematic structural diagram of two connecting members and a plurality of electrode assemblies 22 according to an embodiment of the present application. As shown in FIGs. 15 and 16, for any two adjacent electrode assemblies 22, the first tabs 2221 of the two electrode assemblies 22 may be bent in opposite directions, such that the first tabs 2221 of the two electrode assemblies 22 are approximately located at the same height. Similarly, the second tabs 2222 of the two electrode assemblies 22 are bent in opposite directions, such that the second tabs 2222 of the two electrode assemblies 22 are also approximately located at the same height. The first connecting part 2611 of the first connecting member 261 is electrically connected to the first tabs 2221 of the two electrode assemblies 22 at the same time, and the third connecting part 2621 of the second connecting member 262 is electrically connected to the second tabs 2222 of the two electrode assemblies 22 at the same time. In this way, the area of a connecting region between the first connecting part 2611 and each first tab 2221 can be increased, and the area of a connecting region between the third connecting part 2621 and each second tab 2222 can also be increased, improving the structural stability of the battery cell 20; the total thickness of the tabs 222 and the corresponding connecting members can also be reduced, thereby improving the space utilization rate inside the battery cell 20 and improving the energy density of the battery cell 20.

In some embodiments, parameters such as shapes and dimensions of the first connecting member 261 and the second connecting member 262 may be set according to actual applications. For example, the first connecting member 261 and the second connecting member 262 may adopt the same structure, so as to facilitate processing. For another example, parameters such as shapes and dimensions of the first connecting part 2611 and the second connecting part 2612 of the first connecting member 261 may be the same or different, so as to adapt to different application scenarios. Similarly, parameters such as shapes and dimensions of the third connecting part 2621 and the fourth connecting part 2622 of the second connecting member 262 may be the same or different, so as to adapt to different application scenarios.

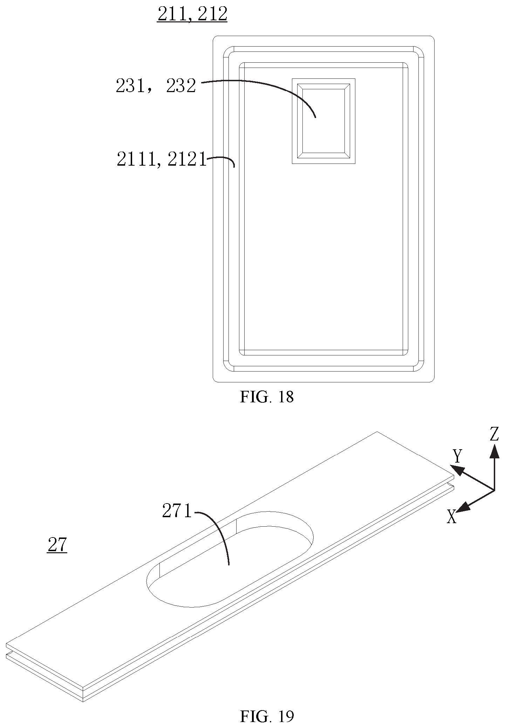

FIG. 17 shows a schematic structural diagram of a first wall 211 or a second wall 212 according to an embodiment of the present application, and FIG. 18 shows a schematic front view of a first wall 211 or a second wall 212 according to an embodiment of the present application. That is, FIGs. 17 and 18 may be used to represent the first wall 211 according to the embodiments of the present application, or may also be used to represent the second wall 212. For example, the first wall 211 may be the first cover plate 215 of the battery cell 20, and the second wall 212 may be the second cover plate 216 of the battery cell 20. In some embodiments, the second wall 212 according to the embodiments of the present application may adopt the same structure as the first wall 211, but the embodiments of the present application are not limited thereto.

In some embodiments, the first wall 211 is provided with a first groove 2111 recessed toward the interior of the battery cell; and/or the second wall 212 is provided with a second groove 2121 recessed toward the interior of the battery cell. The first end surface 223 of the electrode assembly 22 is provided with a first tab 2221 and a second tab 2222. Taking the first end surface 223 being perpendicular to the height direction Z of the electrode assembly 22 as an example, during use of the battery cell 20, the electrode assembly 22 may undergo expansion, and the expansion direction is generally perpendicular to the height direction Z of the electrode assembly 22. For example, the thickness direction Y of the electrode assembly 22 generally expands greatly. The first wall 211 is connected to the third wall 213. In the case that the first wall 211 is provided with a first groove 2111, if the electrode assembly 22 undergoes expansion, the first groove 2111 of the first wall 211 may provide a deformation margin for the first wall 211 to undergo tensile deformation, reducing the risk of cracking between the first wall 211 and other connected walls. For example, if the first wall 211 is the first cover plate 215, the risk of cracking of the connecting region between the first cover plate 215 and the shell body 214 can be reduced. Similarly, the second wall 212 is connected to the third wall 213. In the case that the second wall 212 is provided with a second groove 2121, if the electrode assembly 22 undergoes expansion, the second groove 2121 may provide a deformation margin for the second wall 212 to undergo tensile deformation, reducing the risk of cracking between the second wall 212 and other connected walls.

In some embodiments, parameters such as shapes, depths, and positions of the first groove 2111 and the second groove 2121 may be set according to actual applications. For example, the first groove 2111 is an annular groove and surrounds an edge region of the first wall 211; and/or the second groove 2121 is an annular groove and surrounds an edge region of the second wall 212. This facilitates processing and can also enable the deformation of the first wall 211 and the second wall 212 to be uniformly distributed, thereby providing the deformation margin for tensile deformation of the first wall 211 and the second wall 212 in various directions and providing the structural stability.

In the embodiments of the present application, the battery cell 20 further includes an insulating component 27, and the insulating component 27 is disposed between the first end surface 223 and the third wall 213, and may be configured not only to achieve an electrical insulation between the tab 222 and the third wall 213 but also to support the third wall 213. In some embodiments, the insulating component 27 may be located between the tab 222 and the third wall 213. Further, the insulating component 27 may be configured to be attached to the lower surface of the third wall 213 to support the third wall 213.

FIG. 19 shows a schematic structural diagram of an insulating component 27 according to an embodiment of the present application. For example, the insulating component 27 shown in FIG. 19 may be an insulating component 27 of the battery cell 20 as shown in FIG. 5. As shown in FIG. 19, the insulating component 27 may be approximately of a plate-shaped structure, so as to save the occupied space, improving the space utilization rate and energy density of the battery cell 20.

In some embodiments, the insulating component 27 is provided with a pressure relief hole 271, and the pressure relief hole 271 is configured to provide clearance for the pressure relief mechanism 24, so as to be promptly actuated when the internal pressure or temperature of the battery cell 20 reaches a preset threshold, thereby promptly relieving the internal pressure or temperature of the battery cell 20.

It should be understood that the shape and dimension of the pressure relief hole 271 according to the embodiments of the present application may be configured according to actual applications. In some embodiments, the shape of the pressure relief hole 271 may be configured based on the shape of the pressure relief mechanism 24. For example, the shape of the pressure relief mechanism 24 is generally configured to be the same as the shape of the pressure relief hole 271, so as to facilitate processing. In some embodiments, the area of the pressure relief hole 271 may be set based on the area of the pressure relief mechanism 24. For example, for any plane perpendicular to the height direction Z of the battery cell 20, the area of the orthographic projection of the pressure relief hole 271 is generally slightly greater than the area of the orthographic projection of the pressure relief mechanism 24, so as to reduce the impact of the insulating component 27 on the actuation of the pressure relief mechanism 24.

According to some embodiments of the present application, the present application further provides a battery. The battery includes the battery cell according to any one of the above solutions.

According to some embodiments of the present application, the present application further provides an electric device. The electric device includes the battery according to any one of the above solutions, and the battery is configured to provide electrical energy for the electric device.

The electric device may be any one of the aforementioned devices or systems that use the battery.

According to some embodiments of the present application, referring to FIGs. 3 to 6, the present application provides a battery cell 20. The battery cell includes: a plurality of walls, where the plurality of walls include a first wall 211, a second wall 212, and a third wall 213, the first wall 211 and the second wall 212 are disposed opposite to each other, and the third wall 213 is configured to connect the first wall 211 and the second wall 212; an electrode assembly 22, where a first end surface 223 of the electrode assembly 22 is provided with a first tab 2221 and a second tab 2222 opposite in polarity, and the first end surface 223 is an end surface, facing the third wall 213, of the electrode assembly 22; a first electrode terminal 231, disposed on the first wall 211, where the first electrode terminal 231 is configured to be electrically connected to the first tab 2221; a second electrode terminal 232, disposed on the second wall 212, where the second electrode terminal 232 is configured to be electrically connected to the second tab 2222; and a pressure relief mechanism 24, disposed on the third wall 213. The battery cell 20 further includes: a shell body 214, where the shell body 214 is configured to accommodate the electrode assembly 22, the shell body 214 is provided with a first opening 2141 and a second opening 2142 disposed opposite to each other, and the third wall 213 is a wall of the shell body 214; a first cover plate 215, where the first cover plate 215 is configured to lid the first opening 2141, and the first cover plate 215 is the first wall 211; and a second cover plate 216, where the second cover plate 216 is configured to lid the second opening 2142, and the second cover plate 216 is the second wall 212. The first wall 211 is provided with a first groove 2111 recessed toward the interior of the battery cell; the second wall 212 is provided with a second groove 2121 recessed toward the interior of the battery cell.

The battery cell 20 further includes: a first connecting member 261, where the first connecting member 261 is configured to connect the first tab 2221 and the first electrode terminal 231, and the first connecting member 261 includes a first connecting part 2611 and a second connecting part 2612 that are relatively bent, the first connecting part 2611 being configured to be electrically connected to the first tab 2221, and the second connecting part 2612 being configured to be electrically connected to the first electrode terminal 231; and a second connecting member 262, where the second connecting member 262 is configured to connect the second tab 2222 and the second electrode terminal 232, and the second connecting member 262 includes a third connecting part 2621 and a fourth connecting part 2622 that are relatively bent, the third connecting part 2621 being configured to be electrically connected to the second tab 2222, and the fourth connecting part 2622 being configured to be electrically connected to the second electrode terminal 232.

The battery cell 20 further includes an insulating component 27, and the insulating component 27 is disposed between the first end surface 223 and the third wall 213. The insulating component 27 is provided with a pressure relief hole 271, and the pressure relief hole 271 is configured to provide clearance for the pressure relief mechanism 24.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments may be combined in any manner, provided that there is no structural conflict. The present application is not limited to the specific embodiments disclosed herein, but encompasses all technical solutions falling within the scope of the claims.

## Claims

1. A battery cell, comprising:
a plurality of walls, wherein the plurality of walls comprise a first wall (211), a second wall (212), and a third wall (213), wherein the first wall (211) and the second wall (212) are disposed opposite to each other, and the third wall (213) is configured to connect the first wall (211) and the second wall (212);
an electrode assembly (22), wherein a first end surface (223) of the electrode assembly (22) is provided with a first tab (2221) and a second tab (2222) opposite in polarity, and the first end surface (223) is an end surface, facing the third wall (213), of the electrode assembly (22);
a first electrode terminal (231), disposed on the first wall (211), wherein the first electrode terminal (231) is configured to be electrically connected to the first tab (2221);
a second electrode terminal (232), disposed on the second wall (212), wherein the second electrode terminal (232) is configured to be electrically connected to the second tab (2222); and
a pressure relief mechanism (24), disposed on the third wall (213).

2. The battery cell according to claim 1, further comprising:
a shell body (214), wherein the shell body (214) is configured to accommodate the electrode assembly (22), the shell body (214) is provided with a first opening (2141) and a second opening (2142) disposed opposite to each other, and the third wall (213) is a wall of the shell body (214);
a first cover plate (215), wherein the first cover plate (215) is configured to lid the first opening (2141), and the first cover plate (215) is the first wall (211); and
a second cover plate (216), wherein the second cover plate (216) is configured to lid the second opening (2142), and the second cover plate (216) is the second wall (212).

3. The battery cell according to claim 1 or 2, further comprising:
a first connecting member (261), wherein the first connecting member (261) is configured to connect the first tab (2221) and the first electrode terminal (231), and the first connecting member (261) comprises a first connecting part (2611) and a second connecting part (2612) that are relatively bent, the first connecting part (2611) being configured to be electrically connected to the first tab (2221), and the second connecting part (2612) being configured to be electrically connected to the first electrode terminal (231); and
a second connecting member (262), wherein the second connecting member (262) is configured to connect the second tab (2222) and the second electrode terminal (232), and the second connecting member (262) comprises a third connecting part (2621) and a fourth connecting part (2622) that are relatively bent, the third connecting part (2621) being configured to be electrically connected to the second tab (2222), and the fourth connecting part (2622) being configured to be electrically connected to the second electrode terminal (232).

4. The battery cell according to claim 3, wherein:
the first connecting member (261) is of an integrally formed structure; and/or
the second connecting member (262) is of an integrally formed structure.

5. The battery cell according to claim 3 or 4, wherein:
the first connecting part (2611) is perpendicular to the second connecting part (2612); and/or
the third connecting part (2621) is perpendicular to the fourth connecting part (2622).

6. The battery cell according to any one of claims 1 to 5, wherein:
the first wall (211) is provided with a first groove (2111) recessed toward an interior of the battery cell; and
the second wall (212) is provided with a second groove (2121) recessed toward the interior of the battery cell.

7. The battery cell according to claim 6, wherein:
the first groove (2111) is an annular groove and surrounds an edge region of the first wall (211); and/or
the second groove (2121) is an annular groove and surrounds an edge region of the second wall (212).

8. The battery cell according to any one of claims 1 to 7, further comprising:
an insulating component (27), wherein the insulating component (27) is disposed between the first end surface (223) and the third wall (213).

9. The battery cell according to claim 8, wherein the insulating component (27) is provided with a pressure relief hole (271), and the pressure relief hole (271) is configured to provide clearance for the pressure relief mechanism (24).

10. The battery cell according to any one of claims 1 to 9, wherein the electrode assembly (22) comprises a first electrode plate (2211) and a second electrode plate (2212) opposite in polarity, wherein the first electrode plate (2211) is connected to the first tab (2221), the second electrode plate (2212) is connected to the second tab (2222), and the first electrode plate (2211) and the second electrode plate (2212) are arranged in a winding manner along a winding axis, the winding axis being perpendicular to the first end surface (223).

11. The battery cell according to any one of claims 1 to 9, wherein the electrode assembly (22) comprises a plurality of first electrode plates (2211) and a plurality of second electrode plates (2212), wherein:
the first electrode plate (2211) and the second electrode plate (2212) are opposite in polarity, the first electrode plate (2211) is connected to the first tab (2221), and the second electrode plate (2212) is connected to the second tab (2222); and
the plurality of first electrode plates (2211) and the plurality of second electrode plates (2212) are alternately stacked in a stacking direction, the stacking direction being parallel to the first end surface (223).

12. The battery cell according to any one of claims 1 to 9, wherein the electrode assembly (22) comprises a first electrode plate (2211) and a plurality of second electrode plates (2212), wherein:
the first electrode plate (2211) and the second electrode plate (2212) are opposite in polarity, the first electrode plate (2211) is connected to the first tab (2221), and the second electrode plate (2212) is connected to the second tab (2222); and
the first electrode plate (2211) comprises a plurality of stacked segments and at least one bent segment, wherein the bent segment is configured to connect two adjacent stacked segments, and the plurality of stacked segments and the plurality of second electrode plates (2212) are alternately stacked in a stacking direction, the stacking direction being parallel to the first end surface (223).

13. A battery, comprising:
a plurality of battery cells, wherein the battery cell is the battery cell according to any one of claims 1 to 12.

14. An electric device, comprising:
a battery, wherein the battery comprises the battery cell according to any one of claims 1 to 12, and the battery is configured to supply power to the electric device.
